# FASCICULE DE BREVET EUROPEEN

(11) **EP 1 555 171 B1**
(45) Date de publication et mention de la délivrance du brevet: **19.07.2006**
(21) Numéro de dépôt: 05290055.2
(22) Date de dépôt: 11.01.2005
(51) Int. Cl.: B60R 21/34, B62D 25/12

(54) **Lève capot à actionneur muni d'un système de verrouillage par crochet**
Vorrichtung zum Anheben einer Motorhaube mit einem Haken als Verriegelungssystem
Bonnet-lifter with a locking system by means of a hook

(30) Priorité: 14.01.2004 FR 0400310
(43) Date de publication de la demande: 20.07.2005
(73) Titulaire: SNPE Matériaux Energétiques, 75004 Paris (FR)
(72) Inventeur: Borg, Evrard, 83110 Sanary (FR); Laspesa, Eric, 83140 Six Fours les Plages (FR); Nadeau, Jean-Paul, 83190 Ollioules (FR)
(74) Mandataire: Le Roux, Martine

(56) Documents cités:
- DE-A- 10 111 146
- DE-A- 10 209 664
- DE-U- 20 216 240

## Description

Le domaine technique de l'invention est celui des dispositifs utilisés dans le domaine de la sécurité automobile pour protéger un piéton en cas de choc frontal entre ledit piéton et un véhicule automobile.

Lorsqu'un piéton est percuté par l'avant d'un véhicule automobile, il est courant que la tête du piéton vienne en contact direct avec le capot avant du véhicule. Le choc de la tête sur le capot provoque des déformations du capot. Ces déformations se produisent souvent jusqu'à ce que le capot entre en contact avec le bloc moteur et toutes pièces rigides telles que puits d'amortisseur, mécanisme d'essuie-glace, etc.... Le mouvement de la tête du piéton est alors brusquement stoppé par le capot en contact avec le bloc moteur et subit donc une violente décélération pouvant causer de graves blessures au piéton.

Il est connu dans l'art antérieur des dispositifs permettant, lors d'un choc entre un piéton et un véhicule automobile, de soulever le capot du véhicule d'une certaine hauteur de manière à éviter que les membres du piéton et notamment sa tête soient stoppés, lors du choc contre le capot, par le bloc moteur situé juste au-dessous du capot. Dans les dispositifs de l'art antérieur, le soulèvement du capot est effectué au niveau de l'arrière du capot, c'est-à-dire du côté pare-brise, qui est opposé à celui utilisé pour l'ouverture ou la fermeture du capot lors de son fonctionnement normal, le capot restant fixé à l'avant du véhicule automobile.

La demande de brevet GB 2 373 218 décrit un dispositif permettant de soulever le capot d'un véhicule automobile lors d'une collision. Ce dispositif comporte une structure gonflable à l'aide d'un générateur de gaz. Cette structure est composée d'un matériau déformable plastiquement. Dans ce dispositif, le générateur de gaz est couplé à un détecteur de collision ce qui permet, à demandes précédentes, de soulever le capot très tôt, c'est-à-dire lorsque le véhicule percute le piéton. Dans ce cas, le capot est déjà soulevé lorsque par exemple la tête du piéton vient percuter le capot. Dans un tel dispositif, il est nécessaire que le générateur de gaz soit directement placé sous la structure gonflable de manière à pouvoir obtenir un gonflage rapide et immédiat de la structure. L'installation d'un tel dispositif nécessitera donc de disposer sous le capot du véhicule automobile d'un espace important. Or l'espace libre dans un véhicule est une chose de plus en plus rare du fait notamment de la multiplication du nombre de dispositifs notamment électroniques. De plus ce dispositif, une fois utilisé, devra être remplacé dans sa totalité.

Le document US 6,439,330 décrit un dispositif pour soulever le capot d'un véhicule automobile. Ce dispositif comporte un ensemble pour le soulèvement, doté d'un bras monté en rotation à l'une de ses extrémités avec une patte solidaire du capot. La seconde extrémité du bras est solidaire d'un axe de rotation monté sur un rail et apte à coulisser suivant ledit rail. Un actionneur pyrotechnique comporte une tige dont l'extrémité est montée en rotation sur ledit axe de rotation. L'extraction de la tige sous l'action des gaz générés dans l'actionneur provoque donc la translation de l'axe suivant le rail, ce qui entraîne le soulèvement du capot. Le dispositif décrit présente également un dispositif de verrouillage chargé de bloquer l'ensemble de soulèvement lorsque celui-ci est au repos et donc d'empêcher le soulèvement du capot.

Un dispositif tel que décrit dans ce dernier brevet américain combine, pour obtenir le soulèvement du capot, une translation et une rotation de son ensemble de soulèvement. Une telle cinématique nécessite donc l'utilisation d'une pièce spécifique, en l'occurrence celle d'un rail, pour obtenir la translation de l'extrémité du bras.

Le document DE 199 57 872 divulgue également un dispositif pour le soulèvement d'un capot d'un véhicule automobile. Selon une première configuration, ce dispositif comporte une bielle montée en rotation à ses deux extrémités avec, d'une part, à sa première extrémité, le capot du véhicule et d'autre part, à sa seconde extrémité, un élément déformable solidaire du véhicule. Un actionneur pyrotechnique comporte une tige dont l'extrémité est montée en pivot en un point situé sensiblement au milieu de la bielle. Cet actionneur pyrotechnique est placé sous la bielle de sorte que, lorsqu'il est actionné, sa tige s'extraie verticalement pour faire pivoter la bielle. Lors d'un choc avec un piéton, l'extraction de la tige provoque donc le pivotement de la bielle autour de l'axe situé à sa seconde extrémité. Lorsque la bielle a pivoté, le choc produit par le piéton contre le capot provoque le basculement de la bielle autour de son point central, ce basculement de la bielle étant permis grâce à la déformation de l'élément déformable.

Selon une seconde configuration de ce dispositif, la bielle, à sa seconde extrémité, est fixée directement sur le véhicule. Lors du choc du piéton contre le capot, la bielle ne bascule pas en pivotant autour de son point central au niveau duquel est fixé la tige, mais se tord sur sa partie située entre son point central et sa première extrémité.

Un tel dispositif permet, à l'inverse de celui décrit dans le document américain US 6,439,330, de s'affranchir de l'utilisation d'un rail pour obtenir le soulèvement du capot. De plus, un tel dispositif utilise une cinématique de fonctionnement simple puisque le soulèvement est obtenu uniquement par rotation de la bielle. Toutefois, il n'utilise pas de dispositif de verrouillage permettant d'empêcher l'ouverture du capot. De plus, dans un tel dispositif, le soulèvement du capot est réalisé entièrement et directement par la tige de l'actionneur. La force nécessaire à générer pour soulever le capot doit de fait être très importante et nécessite donc l'utilisation d'une quantité importante de matière pyrotechnique. L'utilisation d'un tel dispositif peut donc s'avérer encombrant et volumineux.

Les caractéristiques de la première partie de la revendication 1 sont connues du document DE-A-10111146.

Le but de l'invention est donc d'obtenir un dispositif de sécurité pouvant être actionné en cas de choc d'un véhicule automobile contre un piéton, qui puisse être réversible par une simple pression manuelle exercée de haut en bas sur le capot. Cette fonction de réversibilité est assurée par un crochet de verrouillage pivotant dont la géométrie et le positionnement permettent le "reverrouillage" dudit dispositif. Ainsi, une fois que le dispositif s'est déclenché, il est possible de replacer le capot dans sa position habituelle sur le véhicule afin de pouvoir rouler et faire réparer ledit véhicule. Il est à préciser que lorsque le dispositif a fonctionné, les gaz chauds du vérin empêchent le capot de redescendre. La fermeture du capot par simple "pression manuelle" n'est possible que lorsque les gaz ont refroidi, c'est-à-dire au bout de plusieurs minutes.

Dans la suite de la description l'expression "axe de rotation" devra être comprise comme représentant soit la ligne fictive autour de laquelle la rotation s'effectue, soit la pièce mécanique permettant d'effectuer cette rotation.

L'objet de l'invention est défini par les caractéristiques de la revendication 1 et concerne un dispositif de sécurité pour soulever le capot d'un véhicule automobile en cas de collision, comprenant un mécanisme de soulèvement dudit capot, un actionneur muni d'un générateur de gaz pyrotechnique et un organe de verrouillage dudit mécanisme de soulèvement caractérisé L'organe de verrouillage est constitué par un crochet monté pivotant et solidaire dudit véhicule automobile, ledit actionneur induisant une action sur ledit crochet pour déverrouiller le mécanisme de soulèvement.

L'actionneur comprend un piston apte à se déplacer sous l'effet des gaz produits par le générateur pour déplacer le crochet et déverrouiller le mécanisme de soulèvement.

Le mécanisme de soulèvement comprend un bras rotatif possédant à une extrémité un axe de rotation retenu par le crochet, ledit axe correspondant à l'axe de rotation pour l'ouverture normale du capot, et possédant à son autre extrémité deux axes de rotations pour la rotation dudit bras lors du fonctionnement dudit dispositif.

Ainsi, l'actionneur provoque soit directement, soit par l'intermédiaire d'une pièce mécanique, le pivotement du crochet pour libérer le dispositif de sécurité.

Avantageusement, le crochet dispose d'un système de rappel lui permettant de se positionner une fois que le dispositif a fonctionné.

De façon préférentielle, le système de rappel est constitué par un ressort à spirales. De cette façon, le système de rappel permet, d'une part, au crochet de rester au contact du mécanisme de soulèvement pour l'empêcher de se déployer tant que le dispositif de sécurité n'a pas fonctionné et, d'autre part, de ramener, après le déclenchement dudit dispositif, ledit crochet dans une position telle qu'elle autorise le "reverrouillage" dudit mécanisme de soulèvement.

Préférentiellement, les trois axes sont parallèles entre eux.

Avantageusement, le bras est constitué par une pièce principale allongée ayant une section en forme de U à l'intérieur de laquelle est logé l'actionneur pyrotechnique, ces deux éléments ayant chacun un axe de rotation correspondant aux deux axes de rotation situés à la même extrémité dudit bras.

De façon préférentielle, la pièce principale supporte une pièce coulissante, autour de laquelle est articulée une patte de soulèvement solidaire du capot, ladite articulation étant réalisée autour de l'axe de rotation servant à l'ouverture normale dudit capot, ledit axe étant initialement retenu par le crochet.

De façon avantageuse, le piston possède une tige présentant un épaulement et la pièce principale du bras rotatif comporte une protubérance avec un méplat, de sorte que le déplacement du piston est stoppé lorsque l'épaulement vient en butée contre le méplat de ladite protubérance.

Préférentiellement, l'axe de rotation de la pièce principale est situé au-dessus de l'axe de rotation de l'actionneur par rapport à la surface d'implantation du bras sur le véhicule.

La mise en combustion de l'actionneur provoque le déplacement du vérin qui, dans un premier temps, pousse le crochet pour déverrouiller le mécanisme de soulèvement et, dans un deuxième temps, vient prendre appui par l'intermédiaire de l'épaulement situé sur sa tige contre le méplat d'une protubérance de la pièce principale du bras rotatif. Du fait que l'axe de rotation de ladite pièce est situé au-dessus de celui de l'actionneur pyrotechnique, le bras se soulève en pivotant, entraînant le soulèvement du capot par l'intermédiaire de la patte montée pivotante autour de la pièce coulissante située dans la pièce principale du bras. Lorsque le bras se soulève, ladite pièce de coulissement se déplace permettant d'allonger ladite pièce principale. Le mouvement ainsi imprimé au capot est un mouvement purement rotatif, permettant d'annuler les efforts induits sur les points de rotation avant du capot.

Avantageusement, le crochet est bloqué dans sa course retour par une butée solidaire du véhicule.

De façon préférentielle, le crochet comprend une surface externe de forme arrondie qui, lorsque ledit crochet se trouve bloqué contre la butée, favorise le reverrouillage du dispositif de sécurité, l'opération de reverrouillage consistant à réenclencher l'axe de rotation dans le crochet par une simple poussée manuelle sur le capot. Cette fermeture du capot n'est possible que plusieurs minutes après, le temps que les gaz émis par la charge pyrotechnique refroidissent suffisamment.

Les dispositifs de sécurité selon l'invention présentent l'avantage d'imprimer au capot un mouvement de rotation pure et donc d'éviter tout effort sur les points de rotation avant du capot. Par ce biais, le système de fermeture normal du capot n'est pas endommagé par le déclenchement des dispositifs de sécurité selon l'invention.

Ils présentent également l'avantage d'être articulés autour d'un axe de rotation déjà existant qui est celui autour duquel s'effectue la fermeture normale du capot, permettant ainsi de simplifier le mécanisme de fonctionnement desdits dispositifs, en réduisant le nombre de pièces impliquées. Enfin, les dispositifs de sécurité selon l'invention ont l'avantage d'avoir un encombrement réduit grâce à un agencement compact desdites pièces.

On donne ci-après la description détaillée de deux modes de réalisation préférés de l'invention en se référant aux figures 1 à 7.
La figure 1 est une vue en perspective d'un premier mode de réalisation d'un dispositif de sécurité selon l'invention, en fin de fonctionnement.
La figure 2 est une vue en coupe axiale longitudinale du dispositif de sécurité de la figure 1, avant fonctionnement.
La figure 3 est une vue en coupe axiale longitudinale du dispositif de sécurité de la figure 1, en cours de fonctionnement.
La figure 4 est une vue en perspective d'un deuxième mode de réalisation d'un dispositif de sécurité selon l'invention, en cours de fonctionnement.
La figure 5 est une vue en coupe axiale longitudinale du dispositif de sécurité de la figure 4, avant fonctionnement.
La figure 6 est une vue en coupe axiale longitudinale du dispositif de sécurité de la figure 4, en cours de fonctionnement.
La figure 7 est une vue en coupe axiale longitudinale d'une partie du dispositif de sécurité de la figure 4.

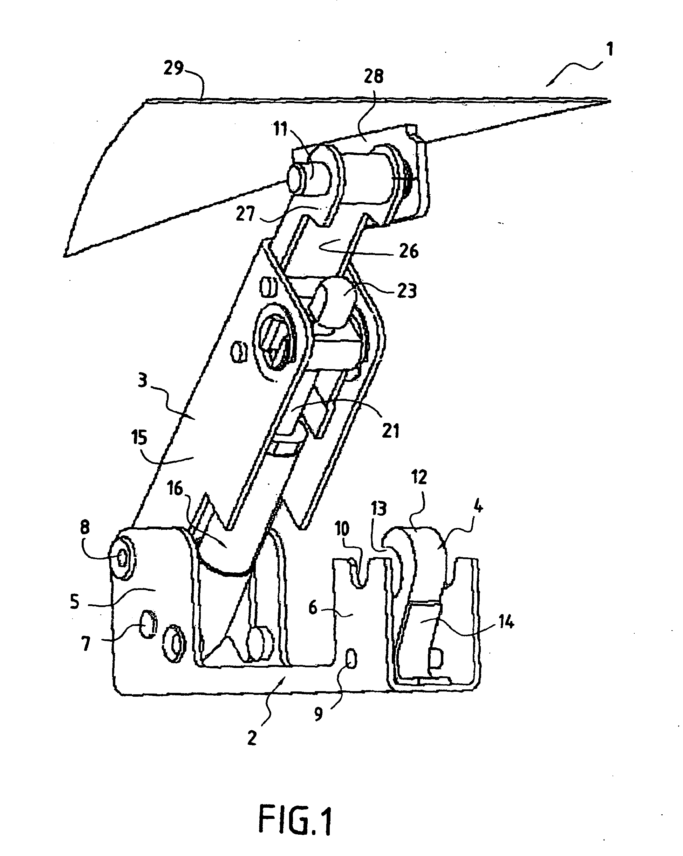

En se référant aux figures 1, 2 et 3, un premier mode de réalisation préféré d'un dispositif de sécurité 1 selon l'invention comprend une pièce support 2 fixée sur le véhicule, un mécanisme de soulèvement 3 articulé autour de la pièce support 2 et un crochet 4 de verrouillage solidaire de ladite pièce support 2.

La pièce support 2 est allongée et comporte une partie arrière 5 avec deux bords relevés dont les plans de surface sont parallèles entre eux, de sorte que ladite partie arrière 5 a une section en forme de U, et une partie avant 6 également avec deux bords relevés dont les plans de surface sont parallèles entre eux de sorte que ladite partie avant 6 a aussi une section en forme de U. Chacun des deux bords relevés de la partie arrière 5 présente deux ouvertures qui se correspondent d'un bord à l'autre, chacune des deux ouvertures d'un même bord étant destinées à recevoir un axe de rotation 7, 8 sous la forme d'une petite pièce cylindrique, chacun des deux axes 7, 8 joignant les deux bords et étant parallèles entre eux. Pour un bord donné, l'une des deux ouvertures, appelée supérieure, est située au-dessus de l'autre ouverture, appelée inférieure, par rapport à la surface d'implantation de la pièce support 2 sur le véhicule, ladite ouverture supérieure étant placée plus près de l'extrémité de la pièce support 2 que ne l'est l'ouverture inférieure. Chacun des deux bords relevés de la partie avant 6 de la pièce support 2 présente une ouverture placée l'une en face de l'autre, lesdites ouvertures étant destinées à recevoir un axe de rotation 9 sous la forme d'une petite pièce cylindrique. Les trois axes de rotation 7, 8, 9 traversant la pièce support 2 sont parallèles entre eux. Les deux bords relevés de la partie avant 6 de la pièce support 2 présentent sur leur bord supérieur une encoche 10, chacune desdites encoches 10 étant placées l'une en face de l'autre et étant destinées à recevoir un axe de rotation 11 sous la forme d'une pièce cylindrique, ledit axe 11 étant parallèle aux trois autres axes de rotation 7, 8, 9 traversant la pièce support 2.

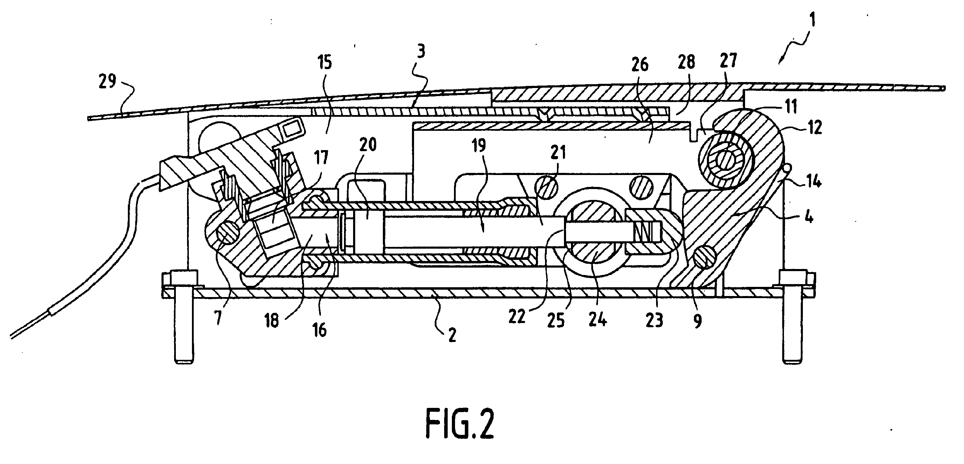

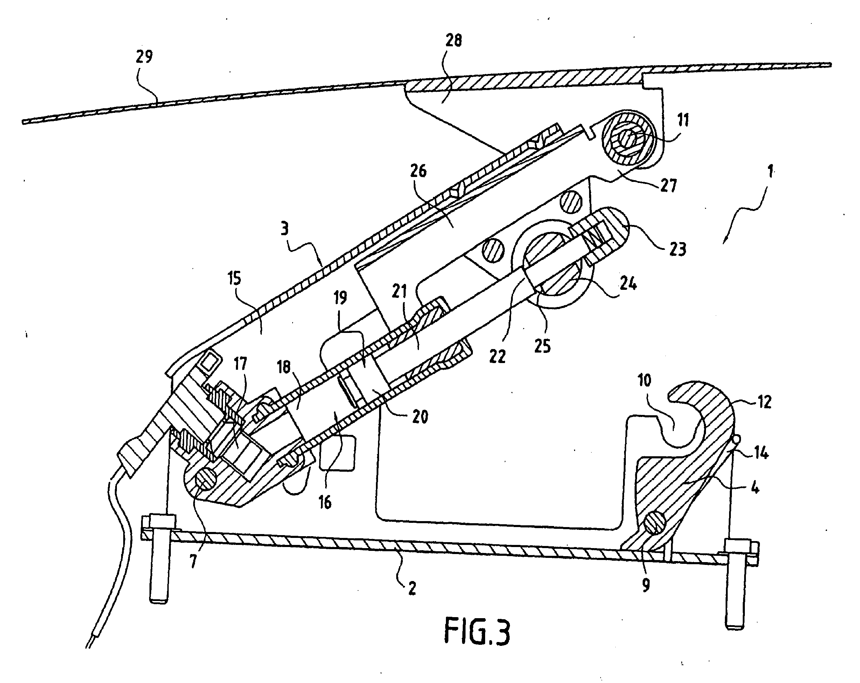

En se référant aux figures 2 et 3, le crochet 4 présente une partie inférieure et une partie supérieure par rapport à la surface d'implantation de la pièce support 2 sur le véhicule, la partie inférieure étant la plus proche de ladite surface, ainsi que deux faces latérales par rapport à un axe fictif traversant les parties inférieure et supérieure sur leur plus grande longueur, l'une des deux face latérales, appelée avant, regardant la partie arrière 5 de la pièce support 2, et l'autre, appelée arrière, étant située derrière le crochet 4. La partie inférieure comporte une ouverture destinée à recevoir l'axe de rotation 9 traversant la partie avant 6 de la pièce support 2 et la partie supérieure, qui a un contour arrondi 12, possède une encoche latérale arrondie 13 creusée sur la face latérale avant du crochet 4 et conçue pour recevoir l'axe de rotation 11 supporté par les encoches 10 de la partie avant 6 de la pièce support 2. Le crochet 4 qui est susceptible de subir un mouvement rotatif autour de l'axe de rotation 9 traversant sa partie inférieure, est repoussé, suivant un sens donné, par l'intermédiaire d'un système de rappel 14 sous la forme d'un ressort à lame, fixé à la pièce support 2 et prenant appui contre la face latérale arrière du ressort 14. Une butée non visible sur les figures et placée à l'intérieur de la pièce support 2 limite la course retour dudit crochet 4. Le mécanisme de soulèvement 3 comprend un bras rotatif constitué par une pièce principale 15 allongée ayant une section en forme de U dans laquelle est logé un actionneur pyrotechnique 16 possédant un corps cylindrique en forme de V dans lequel sont successivement situés une charge pyrotechnique 17, une chambre de combustion 18 et un vérin de poussée 19. En se référant aux figures 2 et 3 sur lesquelles le bord relevé de la pièce principale 15 du bras rotatif a été supprimé pour permettre de visualiser l'intérieur de ladite pièce 15, un segment dudit corps comporte ladite charge pyrotechnique 17, et l'autre segment enferme ladite chambre de combustion 18 et ledit vérin 19. Le vérin 19 possède une partie élargie 20 dont le diamètre externe est inférieur au diamètre interne du corps de l'actionneur 16, de sorte que ladite partie élargie 20 peut glisser de façon hermétique dans ledit corps, et une tige 21 présentant un épaulement 22 permettant de distinguer une première partie prolongeant la partie élargie 20 du vérin 19, et une deuxième partie de diamètre inférieur dont l'extrémité se termine par une tête 23 également de diamètre élargi. La pièce principale 15 du bras rotatif comporte une partie arrière dont les deux bords relevés sont percés d'un trou se faisant face et destinés à recevoir l'axe de rotation 8 traversant les ouvertures supérieures de la partie arrière de la pièce support 2. L'actionneur pyrotechnique 16 possède également une partie arrière correspondant à l'emplacement de la charge pyrotechnique 17, ladite partie étant percée d'un trou destiné à recevoir l'axe de rotation traversant les ouvertures inférieures de la partie arrière de la pièce support 2. La pièce principale 15 du bras rotatif comporte une partie avant possédant une protubérance latérale 24 munie d'un méplat 25 dont le plan est parallèle au plan défini par l'épaulement 22 de la tige 21 du vérin 19. La partie avant de la pièce principale 15 du bras rotatif comprend une pièce coulissante 26 allongée, possédant deux bords relevés ayant des plans de surface parallèle entre eux, de sorte que ladite pièce coulissante 26 a une section en forme de U. Chacun des bords relevés de la partie coulissante 26 se termine par une extrémité arrondie élargie 27, percée d'un trou, chacun des trous se faisant face et formant un passage pour accueillir l'axe de rotation 11 supporté par les deux encoches 10 de la partie avant 6 de la pièce support 2. L'extrémité élargie 27 de chacun des bords relevés de la pièce coulissante 26 constitue une butée pour éviter à ladite pièce coulissante 26 de rentrer complètement dans la pièce principale 15 du bras rotatif. Une patte de soulèvement 28 constituée par une pièce possédant deux plans de surface perpendiculaires entre eux assure la liaison entre la pièce coulissante 26 et le capot 29 du véhicule dont elle est solidaire. Un plan de la patte de soulèvement 28 est ajouré pour être traversé par l'axe de rotation 11 passant par l'extrémité arrondie élargie 27 de la pièce coulissante 26, et l'autre plan de ladite patte 28 est fixé au capot 29 du véhicule par l'intermédiaire d'une pluralité de vis non représentées sur les figures.

Le mode de fonctionnement du premier mode de réalisation préféré de l'invention s'effectue comme suit.

En se référant à la figure 2, la mise à feu de la charge pyrotechnique 17 entraîne, dans un premier temps, la production de gaz dans la chambre de combustion 18 et, dans un deuxième temps, le déplacement du vérin 19. Chronologiquement, la tête 23 dudit vérin 19 pousse le crochet 4 à sa partie inférieure pour le faire pivoter et libérer l'axe de rotation 11 initialement retenu par la partie supérieure dudit crochet 4, puis, l'épaulement 22 de la tige 21 du vérin 19 vient au contact du méplat 25 de la protubérance 24 pour exercer une poussée au niveau de la pièce principale 15 du bras mobile. En se référant aux figures 1 et 3, ladite pièce principale 15 ainsi que l'actionneur 16 qui lui est solidaire, effectuent une rotation autour de leur axe de rotation 7, 8 traversant la partie arrière 5 de la pièce support 2 dans le sens contraire des aiguilles d'une montre. Le bras mobile se soulève alors par sa partie avant. Au fur et à mesure que le bras se soulève, la pièce coulissante 26 émerge de plus en plus de la pièce principale 15 conférant à cette dernière un caractère télescopique. Le capot 29 se soulève alors par l'intermédiaire de la patte de soulèvement 28 qui est articulée autour de la pièce coulissante 26 et dont le positionnement est ajusté par l'augmentation de la longueur apparente de la pièce principale 15 pendant la phase de soulèvement. Les différentes articulations impliquées dans ce dispositif 1 impriment au capot 29 un mouvement de rotation pure autour de l'axe de rotation fictif constitué par le système de fermeture normal dudit capot 29 sur le véhicule, ledit système étant situé à l'avant dudit véhicule. La géométrie spécifique du crochet 4 ainsi que son positionnement occasionné par le système de rappel 14 et la butée, permettent par simple pression sur le capot 29 de rabaisser ledit capot 29 pour réenclencher l'axe de rotation 11 de la partie coulissante 26 dans ledit crochet 4. Le dispositif 1 peut ainsi facilement se reverrouiller. Il est à noter que cette fermeture manuelle n'est possible que lorsque les gaz ont refroidi, c'est-à-dire plusieurs minutes après que le dispositif ait fonctionné.

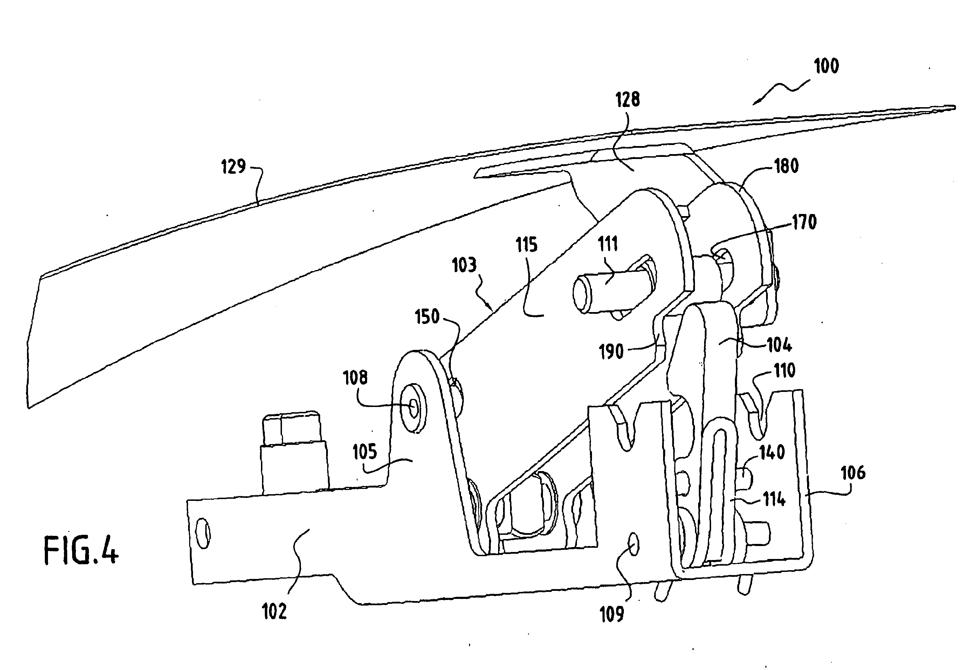

En se référant aux figures 4 à 6, un deuxième mode de réalisation préféré d'un dispositif de sécurité 100 selon l'invention comprend un mécanisme de soulèvement 103 situé entre un actionneur pyrotechnique 116 et un crochet 104 de verrouillage, ledit actionneur 116 et ledit crochet 104 étant solidaires d'une pièce support 102 fixée sur le véhicule. La pièce support 102 qui est allongée, comporte une partie arrière 105 avec deux bords relevés dont les plans de surface sont parallèles entre eux de sorte que ladite partie arrière 105 a une section en forme de U, et une partie avant 106 également avec deux bords relevés dont les plans de surface sont parallèles entre eux de sorte que ladite partie avant 106 a une section en forme de U. Chacun des deux bords relevés de la partie arrière 105 présente un trou, lesdits trous se correspondant d'un bord à l'autre pour définir un passage destiné à recevoir un axe de rotation 108 sous la forme d'une petite pièce cylindrique. Lesdits trous sont situés à la partie supérieure de la partie arrière 105 de la pièce support 102, par rapport à la surface d'implantation de la pièce support 102 sur le véhicule.

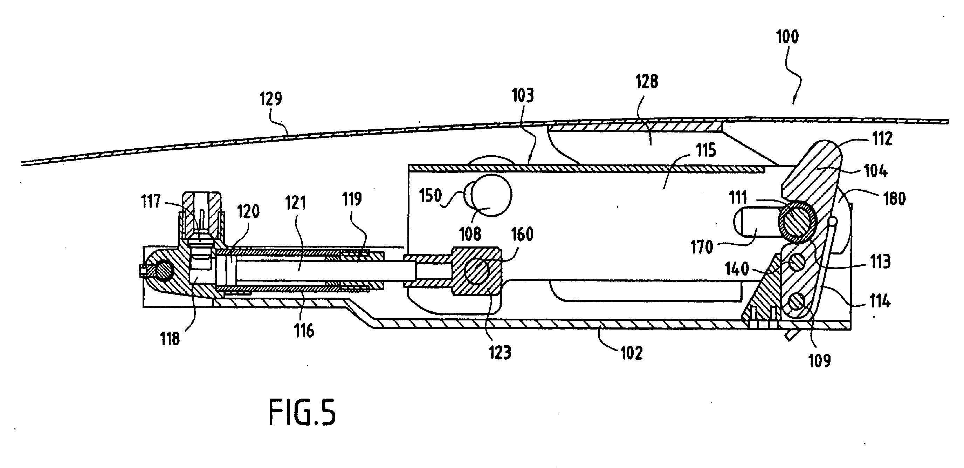

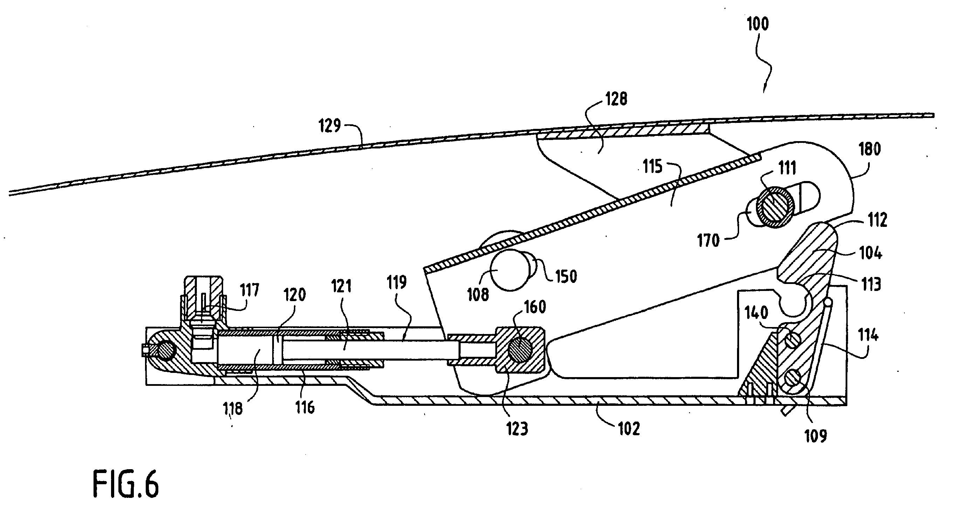

L'actionneur pyrotechnique 116 possède un corps cylindrique en forme de L dans lequel sont successivement situés une charge pyrotechnique 117, une chambre de combustion 118 et un vérin de poussée 119. En se référant aux figures 5 et 6, un segment dudit corps comporte la charge pyrotechnique 117 et l'autre segment enferme ladite chambre de combustion 118 et ledit vérin 119. Le vérin 119 possède une partie élargie 120 dont le diamètre externe est inférieur au diamètre interne du corps de l'actionneur 116, de sorte que ladite partie élargie 120 peut glisser de façon hermétique dans ledit corps, et une tige 121 se terminant par une tête élargie 123 comportant un trou. Chacun des deux bords relevés de la partie avant 106 de la pièce support 102 présente une ouverture placée l'une en face de l'autre, lesdites ouvertures étant destinées à recevoir un axe de rotation 109 sous la forme d'une petite pièce cylindrique. Les deux bords relevés de la partie avant 106 de la pièce support 102 présentent également sur leur bord supérieur une encoche 110, chacune desdites encoches 110 étant placée l'une en face de l'autre et étant destinées à recevoir un axe de rotation 111 sous la forme d'une pièce cylindrique. En se référant aux figures 5 et 6, le crochet 104 présente une partie inférieure et une partie supérieure par rapport à la surface d'implantation de la pièce support 102 sur le véhicule, la partie inférieure étant la plus proche de ladite surface, ainsi que deux faces latérales par rapport à un axe fictif traversant les parties inférieure et supérieure sur leur plus grande longueur, l'une des deux faces latérales, appelée avant, regardant la partie arrière 105 de la pièce support 102, et l'autre, appelée arrière, étant située derrière le crochet 104. La partie inférieure comporte une ouverture destinée à recevoir l'axe de rotation 109 traversant la partie avant 106 de la pièce support 102 et la partie supérieure, qui a un contour arrondi 112, possède une encoche latérale arrondie 113 creusée sur la face latérale avant du crochet 104 et conçue pour recevoir l'axe de rotation 111 supporté par les encoches 110 de la partie avant 106 de la pièce support 102. Le crochet 104 qui est susceptible de subir un mouvement rotatif autour de l'axe de rotation 109 traversant sa partie inférieure est repoussé suivant un sens donné par l'intermédiaire d'un système de rappel 114 sous la forme d'un ressort à spirales, fixé à la pièce support 102 et dont un segment coudé prend appui contre la face latérale arrière dudit ressort 114. Le ressort 114 est enroulé partiellement autour de l'axe de rotation 109 traversant la partie inférieure du crochet 104. Ladite partie inférieure du crochet 104 comporte un ergot 140 de butée parallèle à l'axe de rotation 109 dudit crochet 104 et située entre la partie supérieure du crochet 104 et ledit axe de rotation 109. Une butée non visible sur les figures et placée à l'intérieure de la pièce support 102 limite la course retour dudit crochet 104.

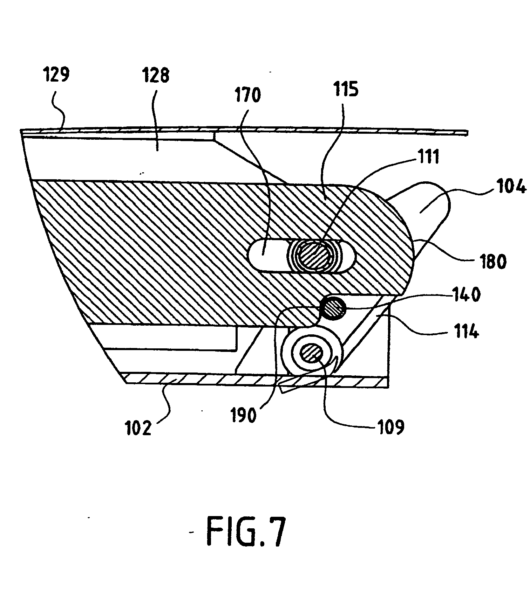

Le mécanisme de soulèvement 103 comprend une bielle allongée 115 constitué par deux bords latéraux allongés, identiques et parallèles entre eux et reliés entre eux par un bord de liaison dont le plan de surface est perpendiculaire aux plans de surface desdits bords latéraux. Comme le montrent les figures 5 et 6, chacun des deux bords latéraux de la bielle 115 comporte une partie arrière possédant une fente 150, chacune des fentes 150 se faisant face pour constituer un passage destiné à recevoir l'axe de rotation 108 traversant les trous de la partie arrière 105 de la pièce support 102, et une partie avant. Les fentes 150 de la partie arrière de la bielle 115 et les trous de la partie arrière de la pièce support 102 se correspondent. La partie arrière de la bielle 115 se divise en une zone supérieure et une zone inférieure par rapport à la surface d'implantation de la pièce support 102, la zone inférieure étant localisée entre la partie supérieure de ladite bielle 115 et ladite surface d'implantation. Les fentes 150 sont situées dans ladite zone supérieure de la partie arrière de la bielle 115. La zone inférieure présente un ergot 160 de fixation dont l'axe est parallèle à l'axe de rotation 108 traversant la fente 150 de la partie arrière de la bielle 115. L'actionneur 116 est solidarisé à la bielle 115 par l'intermédiaire dudit ergot 160 de fixation qui traverse la tête élargie 123 de la tige 121 du vérin 119. En se référant à la figure 7, chaque bord latéral de la bielle 115 possède à sa partie avant une fente 170 dont le grand axe de section est parallèle au grand axe de section de la fente 150 de la partie arrière de ladite bielle 115, chacune desdites fentes 170 de la partie avant se faisant face pour constituer un passage destiné à recevoir l'axe de rotation 111 passant par les deux encoches 110 de la partie avant 106 de la pièce support 102, ledit axe 111 passant également dans l'encoche latérale arrondie 113 du crochet 104. La partie avant de chacun des deux bords latéraux de la bielle 115 comporte une extrémité arrondie 180 ainsi qu'une cassure située en retrait de ladite extrémité 180, ladite cassure ménageant une surface d'appui 190 destinée à venir en butée contre l'ergot de butée 140 de la partie inférieure du crochet 104.

Une patté de soulèvement 128 constituée par une pièce possédant deux plans de surface perpendiculaires entre eux assure la liaison entre la partie avant de la bielle 115 et le capot 129 du véhicule dont elle est solidaire. Un plan de la patte de soulèvement 128 est ajouré pour être traversé par l'axe de rotation 111 passant par les fentes 170 de la partie avant de la bielle 115 et l'autre plan de ladite patte 128 est fixé au capot 129 du véhicule par l'intermédiaire d'une pluralité de vis non représentées sur les figures.

Le mode de fonctionnement du deuxième mode de réalisation préféré de l'invention s'effectue comme suit.

En se référant à la figure 5, la mise à feu de la charge pyrotechnique 117 entraîne, dans un premier temps la production de gaz dans la chambre de combustion 118 et, dans un deuxième temps, le déplacement en translation du vérin 119. Puisque ledit vérin 119 est solidaire de la bielle 115, ladite bielle 115 subit également un mouvement de translation grâce aux fentes 150 et 170 qu'elle comporte sur ses parties avant et arrière. En se référant à la figure 7, la partie avant de la bielle 115 vient au contact de l'ergot de butée 140 du crochet 104 par l'intermédiaire de la surface d'appui 190 ménagée par la cassure, et provoque le pivotement du crochet 104 qui libère alors l'axe de rotation 111 retenu par ledit crochet 104. La translation de la bielle 115 s'effectue jusqu'à ce que la fente 150 située à la partie arrière de ladite bielle 115 vient en butée contre l'axe de rotation 108 qui la traverse et qui est fixé à la partie arrière 105 de la pièce support 102. La bielle 115 pivote alors autour dudit axe de rotation 108 et se soulève par sa partie avant qui est maintenant libérée. Le soulèvement du capot 129 s'effectue alors par l'intermédiaire de la patte de soulèvement 128 qui est articulée autour de la partie avant de la bielle 115. Ledit soulèvement est rendu possible par les fentes 170 de ladite partie avant de la bielle 115, permettant à l'axe de rotation 111 qui les traverse de se déplacer dans lesdites fentes 170 pour réajuster le positionnement de ladite patte 128 pendant la phase de soulèvement du capot 129.

La géométrie spécifique du crochet 104 ainsi que son positionnement occasionné par le système de rappel 114 et la butée, permettent par simple pression sur le capot 129 de rabaisser ledit capot 129 pour réenclencher l'axe de rotation 111 de la partie avant de la bielle 115 dans ledit crochet 104. Le dispositif 100 peut ainsi facilement se reverrouiller. La fermeture du capot ne peut s'effectuer que plusieurs minutes après que le dispositif a fonctionné, le temps que les gaz produits par le générateur refroidissent.

## Revendications

1. Dispositif de sécurité (1) pour soulever le capot (29) d'un véhicule automobile en cas de collision, comprenant un mécanisme de soulèvement (3) dudit capot (29), un actionneur (16) muni d'un générateur de gaz pyrotechnique, ledit actionneur (16) comprenant un piston (19) apte à se déplacer sous l'effet des gaz produits par le générateur pour déplacer le crochet (4) et déverrouiller le mécanisme de soulèvement (3), et un organe de verrouillage dudit mécanisme de soulèvement (3), ledit organe étant constitué par un crochet (4) monté pivotant et solidaire dudit véhicule automobile, ledit actionneur (16) coopérant avec ledit crochet (4) pour déverrouiller le mécanisme de soulèvement (3), **caractérisé en ce que** le mécanisme de soulèvement (3) comprend un bras rotatif possédant à une extrémité un axe de rotation (11) retenu par le crochet (4), ledit axe (11) correspondant à l'axe de rotation pour l'ouverture normale du capot (29), et possédant à son autre extrémité deux axes (7,8) de rotation pour la rotation dudit bras lors du fonctionnement dudit dispositif.

2. Dispositif de sécurité selon la revendication 1, **caractérisé en ce que** le crochet (4) dispose d'un système de rappel (14) lui permettant de se repositionner une fois que le dispositif a fonctionné.

3. Dispositif de sécurité selon la revendication 2, **caractérisé en ce que** le système de rappel (14) est constitué par un ressort à spirales

4. Dispositif de sécurité selon l'une quelconque des revendications 1 à 3, **caractérisé en ce que** les trois axes (7,8,11) sont parallèles entre eux.

5. Dispositif de sécurité selon l'une quelconque des revendications 1 à 4, **caractérisé en ce que** le bras est constitué par une pièce principale allongée (15) ayant une section en forme de U à l'intérieur de laquelle est logé l'actionneur pyrotechnique (16), ces deux éléments ayant chacun un axe de rotation (7,8) correspondant aux deux axes de rotations situés à la même extrémité dudit bras.

6. Dispositif de sécurité selon la revendication 5, **caractérisé en ce que** la pièce principale (15) supporte une pièce coulissante (26) autour de laquelle est articulée une patte de soulèvement (28) solidaire du capot (29), ladite articulation étant réalisée autour de l'axe de rotation (11) servant à l'ouverture normale dudit capot (29), ledit axe (11) étant initialement retenu par le crochet (4).

7. Dispositif de sécurité selon la revendication 5 ou 6, **caractérisé en ce que** le piston (19) possède une tige (21) présentant un épaulement (22) et la pièce principale (15) du bras rotatif comporte une protubérance (24) avec un méplat (25), de sorte que le déplacement du piston (19) est stoppé lorsque l'épaulement (22) vient en butée contre le méplat (25) de ladite protubérance (24).

8. Dispositif de sécurité selon l'une quelconque des revendications 5 à 7, **caractérisé en ce que** l'axe de rotation (8) de la pièce principale (15) est situé au-dessus de l'axe de rotation (7) de l'actionneur (16) par rapport à la surface d'implantation du bras sur le véhicule.

9. Dispositif de sécurité selon l'une quelconque des revendications 2 à 9, **caractérisé en ce que** le crochet (4) est bloqué dans sa course retour par une butée solidaire du véhicule.

10. Dispositif de sécurité selon la revendication 9, **caractérisé en ce que** le crochet (4) comprend une surface externe de forme arrondie (12) qui, lorsque ledit crochet (4) se trouve bloqué contre la butée, favorise le reverrouillage du dispositif, l'opération de reverrouillage consistant à réenclencher l'axe de rotation (11) dans le crochet (4) par une simple poussée sur le capot (29).

## Claims

1. Safety device (1) for lifting the bonnet (29) of a motor vehicle in the event of a collision, comprising a mechanism (3) for lifting the said bonnet (29), an actuator (16) fitted with a pyrotechnic gas generator, the said actuator (16) comprising a piston (19) capable of moving under the effect of the gases produced by the generator to move the hook (4) and release the lift mechanism (3) and a member for latching the said lift mechanism (3), the said member consisting of a hook (4) mounted pivotingly and fixedly attached to the said motor vehicle, the said actuator (16) interacting with the said hook (4) to unlatch the lift mechanism (3), **characterized in that** the lift mechanism (3) comprises a rotating arm having at one end a rotation shaft (11) retained by the hook (4), the said shaft (11) corresponding to the rotation shaft for the normal opening of the bonnet (29), and having at its other end two rotation shafts (7, 8) for the rotation of the said arm during the operation of the said device.

2. Safety device according to claim 1, **characterized in that** the hook (4) has a return system (14) allowing it to reposition itself once the device has operated.

3. Safety device according to claim 2, **characterized in that** the return system (14) consists of a coil spring.

4. Safety device according to any one of claims 1 to 3, **characterized in that** the three shafts (7, 8, 11) are parallel with one another.

5. Safety device according to any one of claims 1 to 4, **characterized in that** the arm consists of an elongate main piece (15) having a U-shaped section within which is housed the pyrotechnic actuator (16), these two elements each having a rotation shaft (7, 8) corresponding to the two rotation shafts situated at the same end of the said arm.

6. Safety device according to claim 5, **characterized in that** the main piece (15) supports a sliding piece (26) about which a lift bracket (28) integral with the bonnet (29) is articulated, the said articulation taking place about the rotation shaft (11) used for the normal opening of the said bonnet (29), the said shaft (11) being initially retained by the hook (4).

7. Safety device according to claim 5 or 6, **characterized in that** the piston (19) has a rod (21) having a shoulder (22) and the main piece (15) of the rotating arm comprises a protuberance (24) with a flat (25), such that the motion of the piston (19) is stopped when the shoulder (22) butts up against the flat (25) of the said protuberance (24).

8. Safety device according to any one of claims 5 to 7, **characterized in that** the rotation shaft (8) of the main piece (15) is situated above the rotation shaft (7) of the actuator (16) relative to the surface on which the arm is installed on the vehicle.

9. Safety device according to any one of claims 2 to 8, **characterized in that** the hook (4) is locked in its return travel by a stop fixedly attached to the vehicle.

10. Safety device according to claim 9, **characterized in that** the hook (4) comprises a rounded outer surface (12) which, when the said hook (4) is locked against the stop, promotes the re-latching of the device, the re-latching operation consisting in re-engaging the rotation shaft (11) in the hook (4) by simply pushing on the bonnet (29).

## Patentansprüche

1. Sicherheitsvorrichtung (1) zum Anheben der Fronthaube (29) eines Kraftfahrzeugs im Falle eines Zusammenstosses, mit einem Hebemechanismus (3) der Fronthaube (29), einer Auslösevorrichtung (16), die mit einem pyrotechnischen Gasgenerator ausgestattet ist, der einen Druckkolben (19) umfasst, welcher dazu geeignet ist, sich unter der Einwirkung der von dem Generator erzeugten Gase zu verschieben, um den Fanghaken (4) zu verschieben und den Hebemechanismus (3) zu entriegeln und einem Verriegelungselement des Hebemechanismus (3), wobei dieses Element aus einem Fanghaken (4) besteht, der schwenkbar und kraftschlüssig mit dem Kraftfahrzeug verbunden ist, wobei die Auslösevorrichtung (16) mit dem Fanghaken (4) zusammenwirkt, um den Hebemechanismus (3) zu entriegeln, **dadurch gekennzeichnet, dass** der Hebemechanismus (3) einen Schwenkarm umfasst mit einer Drehachse (11) an einem Ende, die durch den Fanghaken (4) zurückgehalten wird, wobei die Achse (11) mit der Drehachse für die normale Öffnung der Fronthaube (29) übereinstimmt und der Schwenkarm an seinem anderen Ende zwei Drehachsen (7,8) zur Drehung während des Betriebs der Vorrichtung besitzt.

2. Sicherheitsvorrichtung nach Anspruch 1, **dadurch gekennzeichnet, dass** der Fanghaken (4) über ein Rückholsystem (14) verfügt, das ihm ermöglicht, sich neu zu positionieren, nachdem die Vorrichtung ihre Funktion erfüllt hat.

3. Sicherheitsvorrichtung nach Anspruch 2, **dadurch gekennzeichnet, dass** das Rückholsystem (14) aus einer Spiralfeder gebildet ist.

4. Sicherheitsvorrichtung nach einem beliebigen Anspruch der Ansprüche 1 bis 3, **dadurch gekennzeichnet, dass** die drei Achsen (7,8,11) parallel zueinander verlaufen.

5. Sicherheitsvorrichtung nach einem beliebigen Anspruch der Ansprüche 1 bis 4, **dadurch gekennzeichnet, dass** der Schwenkarm aus einem länglichen Hauptteil (15) besteht, das einen U-förmigen Abschnitt hat, in dessen Innerem die pyrotechnische Auslösevorrichtung (16) untergebracht ist, wobei jedes dieser beiden Elemente eine Drehachse (7,8) hat, die mit den beiden am selben Ende des Schwenkarmes befindlichen Drehachsen übereinstimmt.

6. Sicherheitsvorrichtung nach Anspruch 5, **dadurch gekennzeichnet, dass** das Hauptteil (15) ein verschiebbares Teil (26) trägt, das mit einem fest mit der Fronthaube (29) verbundenen Haubenscharnier (28) schwenkbar verbunden ist, wobei diese Schwenkachse um die Drehachse (11) angeordnet ist, die dem normalen Öffnen der Fronthaube (29) dient und diese Achse (11) anfänglich durch den Fanghaken (4) zurückgehalten wird.

7. Sicherheitsvorrichtung nach Anspruch 5 oder 6, **dadurch gekennzeichnet, dass** der Druckkolben (19) eine Kolbenstange (21) besitzt, die einen Absatz (22) aufweist und das Hauptteil (15) des Schwenkarms eine Protuberanz (24) umfasst mit einer Abflachung (25), so dass die Bewegung des Druckkolbens (19) gestoppt wird, wenn der Absatz (22) an die Abflachung (25) der Protuberanz (24) schlägt.

8. Sicherheitsvorrichtung nach einem beliebigen Anspruch der Ansprüche 5 bis 7, **dadurch gekennzeichnet, dass** bezogen auf die Oberfläche der Befestigung des Schwenkarms am Fahrzeug die Drehachse (8) des Hauptteils (15) oberhalb der Drehachse (7) der Auslösevorrichtung (16) angeordnet ist.

9. Sicherheitsvorrichtung nach einem beliebigen Anspruch der Ansprüche 2 bis 9, **dadurch gekennzeichnet, dass** der Fanghaken (4) in seiner Rückbewegung durch ein fest mit dem Fahrzeug verbundenes Widerlager blockiert wird.

10. Sicherheitsvorrichtung nach Anspruch 9, **dadurch gekennzeichnet, dass** der Fanghaken (4) eine runde äußere Oberfläche (12) aufweist, die das Wiederverriegeln der Vorrichtung fördert, wenn der Fanghaken (4) durch das Widerlager blockiert ist, wobei der Vorgang des Wiederverriegelns darin besteht, dass die Drehachse (11) durch einen einfachen Stoß auf die Fronthaube (29) wieder in den Fanghaken (4) eingeklinkt wird.
